# EUROPÄISCHE PATENTANMELDUNG

(11) **EP 1 641 196 A1**
(43) Veröffentlichungstag der Anmeldung: **29.03.2006**
(21) Anmeldenummer: 05108786.4
(22) Anmeldetag: 23.09.2005
(51) Int. Cl.: H04L 12/56

(54) **Verfahren zur Optimierung der Verkehrsverteilung in einem Kommunikationsnetz mit Mehrwege-Routing**

(30) Priorität: 28.09.2004 DE 102004047024
(71) Anmelder: SIEMENS AKTIENGESELLSCHAFT, 80333 München (DE)
(72) Erfinder: Schollmeier, Gero, 82131, Gauting (DE); Winkler, Christian, 80339, München (DE)
(74) Vertreter: Berg, Peter

(57) **Zusammenfassung**

Die Erfindung betrifft Verfahren zur Optimierung der Verkehrsverteilung in einem, Knoten (X, Y, Z) und Links (L1, L2) umfassenden Kommunikationsnetz mit Mehrwege-Routing. Bei diesem Verfahren wird nach der Routenberechnung der erwartete Datenverkehr (t_{d}) des gesamten Kommunikationsnetzes in Anteile (n) unterteilt. In einem ersten Schritt wird entsprechend einer Anfangsverteilung ein Anteil (n) des Datenverkehrs (t_{d}) auf die zu jedem Knoten (X) zugehörigen, weiterführenden Links (L1, L2) aufgeteilt. In einem weiteren Schritt wird unter Berücksichtigung der Ergebnisse (w_{d}, 1-w_{d}) des ersten Schrittes eine neue Verteilung (w1, w2) des Datenverkehrs (t_{d}) ermittelt und ein weiterer Anteil auf die zu jedem Knoten (X) zugehörigen, weiterführenden Links (L1, L2) entsprechend der neu ermittelten Verteilung (w1, w2) aufgeteilt. Im nächsten Schritt wird unter Berücksichtigung der Summe aus den Ergebnissen (w1, w2, t1, t2) der vorangegangenen Schritte eine neue Verteilung des Datenverkehrs (t_{d}) ermittelt und ein weiterer Anteil (n) auf die zu jedem Knoten (X) zugehörigen, weiterführenden Links (L1, L2) aufgeteilt. Dieser Schritt wird dann so lange wiederholt, bis alle Anteile (n) des gesamten Datenverkehrs (t_{d}) auf das Kommunikationsnetz aufgeteilt sind.

Das erfindungsgemäße Verfahren bietet den Vorteil, dass es sinngemäße für alle Mehrwege-Routing-Verfahren zur Optimierung der Verkehrsverteilung einsetzbar ist. Das erfindungsgemäße Verfahren ist um Größenordnungen schneller als etablierte Optimierungsverfahren wie beispielsweise "Simulated Annealing". Es werden ähnlich gute Ergebnisse bei der Optimierung der Verkehrsverteilung erzielt.

## Beschreibung

Die Erfindung betrifft ein Verfahren zur Optimierung der Verkehrsverteilung in einem, Knoten und Links umfassenden Kommunikationsnetz mit Mehrwege-Routing.

Ein Kommunikationsnetz ist definitionsgemäß eine Ressource, welche voneinander entfernte Netzknoten umfasst, die über Leitungen oder sogenannte Links miteinander verbunden sind. Ein Netzknoten oder auch Knoten ist dabei eine Station im Kommunikationsnetz, an der mindestens zwei oder mehrere Links zusammenlaufen. Zusätzlich können diese Knoten auch Zugangspunkte zum Kommunikationsnetz sein und so als Datenquelle oder Ziel für Daten dienen. Als Link wird die meist dauerhafte Verbindung zwischen zwei Netzknoten bezeichnet. Bei einem der Art aufgebauten Kommunikationsnetz werden zwei Arten aufgrund der Vermittlungstechnik unterschieden: leitungsvermittelte und paketorientierte Kommunikationsnetze.

Beim leitungsvermittelten Kommunikationsnetz wie beispielsweise Telekommunikationsnetze ist für die gesamte Dauer eines Datentransports ein durchgehender Kanal geschaltet.

Beim paketorientierten Kommunikationsnetz wie beispielsweise X.25-Netze oder dem Internet wird einer Verbindung zur Übermittlung von Information kein permanenter, durchgehender, physikalischer Kanal zur Verfügung gestellt, sondern die Information in kleine, einzelne und manchmal auch verschieden lange Pakete aufgeteilt, wobei Zusatzdaten zur Identifikation von Datenquellen und Ziel in die Datenpakete verpackt werden. Die Zusatzdaten dieser Pakete werden dann von den Netzknoten, die sie durchlaufen, analysiert und die Pakete vom jeweiligen Netzknoten bis zum Ziel weitergeleitet. Die Analyse der Zusatzdaten der Pakete in den einzelnen Netzknoten und das entsprechende Weiterleiten der einzelnen Pakete wird auch als Routing bzw. Routing-Verfahren bezeichnet. Ein Netzknoten, in dem ein solches Routing-Verfahren implementiert ist, wird als Router bezeichnet.

In herkömmlichen Datennetzen wie beispielsweise dem Internet wird beim Routing üblicherweise mit Hilfe einer Metrik ein optimaler Pfad für die durch das Kommunikationsnetz zu vermittelten Pakete ermittelt. Unter Metrik werden dabei feste Routingkriterien verstanden. In den einzelnen Netzknoten werden Informationen zu den Pfaden in sogenannten Routingtabellen hinterlegt, die laufenden entsprechend der ermittelten Pfade angepasst werden. Dies geschieht mittels sogenannter Link-State-Nachrichten, in denen benachbarte Netzknoten über die bei den anderen benachbarten Netzknoten vorhandenen Links und deren Status informiert werden.

In einer Routingtabelle ist dann üblicherweise für ein bestimmtes Ziel, das durch die Zieladresse des Paketes gegeben ist, eine Adresse für den nächsten Knoten hinterlegt. Von einem Netzknoten, der ein Paket erhält, wird dann die im Paket integrierte Zieladresseninformation ausgewertet, die Adresse des zugehörigen nächsten Netzknoten anhand der Routingtabelle bestimmt und das Paket an den entsprechenden Knoten weitergeleitet. Auf diese Weise werden die Pakete sozusagen von Knoten zu Knoten durch das Kommunikationsnetz von der Datenquelle bis zum Ziel vermittelt.

Ein wichtiger Ansatz zur Verbesserung des Routings und damit der Optimierung von paketorientierten Kommunikationsnetzen vor allem in Hinblick auf Echtzeitverkehr ist das sogenannte Mehrwege-Routing, das häufig auch mit dem englischen Ausdruck "Multipath Routing" bezeichnet wird. Dabei wird vorgesehen, Pakete entlang zweier oder mehrerer Pfade innerhalb eines Kommunikationsnetzes zu einem Ziel zu senden. Mehrwege-Routing bringt dabei wichtige Verbesserungen gegenüber dem herkömmlichen Routing, da einerseits durch die Verteilung von Paketen auf mehrere verschiedene Wege eine bessere und effizientere Auslastung des Kommunikationsnetzes erzielt wird und andererseits Verzögerungen und das Verwerfen von Paketen durch aufgrund von Ungleichbelastung auftretenden Engpässen deutlich unwahrscheinlicher wird. Außerdem kann Mehrwege-Routing auch für eine schnelle Reaktion auf Störungen oder Ausfälle innerhalb eines Kommunikationsnetzes verwendet werden.

Im Regelbetrieb verteilt ein Knoten den Datenverkehr in Richtung eines Ziels gleichmäßig oder nach bestimmten Verteilgewichten auf den verfügbaren Wegefächer. Ein Wegefächer ist dabei durch vom Knoten abgehende Links - in der deutschsprachigen Literatur auch als Kanten bezeichnet - gegeben, auf die Pakete verteilt werden. Bei Ausfall eines Links nimmt der Knoten den betroffenen Weg aus dem Wegefächer und verteilt den Datenverkehr entsprechend auf die verbliebenen Wege um. Dabei kann für den Datenverkehr sichergestellt werden, dass nur so viel Datenverkehr im Netz zugelassen wird, dass der nach einem Fehler verbleibende Wegefächer diesen Datenverkehr auch tatsächlich tragen kann. Das Netz bietet damit also eine geplante Reserve, die im Fehlerfall den Datenverkehr unter Einhaltung der zugesagten Dienstqualität übernimmt.

Bei diesem Verfahren wird allerdings beim Routing für die Auswahl der Wege zur Weiterleitung der Pakete lediglich die Topologie des Kommunikationsnetzes und gegebenenfalls eine konfigurierbare Link-Metrik einbezogen. Eine möglichst aufgeglichene Verteilung der Verkehrslast im Kommunikationsnetz wird dabei allerdings nicht geachtet.

Für IP-Netze wurde im Rahmen der zweiten Version des OSPF (Open Shortest Path First)-Protokolls vorgesehen, Protokolle entlang mehrerer Wege, die im Sinne einer Metrik gleiche Länge aufweisen, zu transportieren. Diese Protokollerweiterung ist unter dem Kürzel ECMP (Equal Cost Multi Path) in der Fachwelt bekannt. Es erfolgt im Rahmen dieses Konzeptes eine Gleichverteilung auf die verschiedenen Wege, die auch durch die gleiche Länge bzw. die gleichen Kosten nahegelegt ist, aber den Nachteil aufweist, dass der Freiheitsgrad einer unregelmäßigen und auf der Verkehrsbelastung der einzelnen Links beruhenden Aufteilung des Datenverkehrs fehlt.

Aus dem Stand der Technik sind zwar verschiedene Verfahren bekannt, um bei Mehrwege-Routing-Verfahren und dem oben angeführten ECMP-Verfahren die Verkehrsführung im Kommunikationsnetz zu optimieren, indem künstliche Routing-Metriken mit in der Regel aufwendigen und rechenintensiven Optimierungsverfahren wie beispielsweise dem "Simulated Annealing" bestimmt werden. Bei diesen Verfahren bleibt allerdings die Einschränkung, dass sie einerseits auf einer gleichmäßigen Verteilung der Verkehrslast auf die vorhandenen Wege beruhen und andererseits die Berechnung der Routing-Metrik numerisch aufwendig ist.

Ein weiterer auf Mehrwege-Routing basierender Ansatz zur Verbesserung des Routings und damit der Verkehrsverteilung innerhalb eines Kommunikationsnetzes wird im Rahmen des KING (Key Components for the mobile Internet of Next Generation) Projekts entwickelt. Bei dem KING Projekt werden die zentral bzw. am Rand des Netzes benötigte Informationen im Vergleich zu herkömmlichen Verfahren mit Bandbreitenreservierung stark reduziert, indem Routingentscheidungen wie beim herkömmlichen IP-Netz im Wesentlichen lokal durchgeführt werden. Netzweite Zustände müssen nicht gehalten werden. Entscheidende Punkte des Konzeptes sind daher die Verkehrskontrollen am Netzeingang und Netzausgang, die Übertragung von Verkehr von einem Eingangspunkt zu einem Ausgangspunkt entlang mehrerer Wege (Mehrwege-Routing) und die Verteilung auf verschiedene Wege und Umverteilung bei Störungen durch lokale Routingentscheidungen. Dieser Ansatz hat allerdings ebenfalls den Nachteil, dass die im Rahmen des KING Projektes erarbeiteten Optimierungsverfahren für eine Verbesserung der Verteilung des Datenverkehrs numerisch wie zeitlich aufwendig sind, was den praktischen Einsatz dieser Optimierungsverfahren erschwert, wenn beispielsweise nach dem Ausfall eines Links rasch die Verkehrsverteilung im Kommunikationsnetz neu bestimmt werden muss.

Der Erfindung liegt daher die Aufgabe zugrunde, ein Verfahren anzugeben, das auch eine unregelmäßige, auf der Verkehrsbelastung der einzelnen Links beruhende Aufteilung des Datenverkehrs zulässt und durch das eine optimale Verkehrverteilung bzw. die diese Verkehrsverteilung bestimmenden optimalen Verkehrsgewichte möglichst schnell berechnet werden können.

Erfindungsgemäß wird diese Aufgabe mit einem Verfahren der eingangs erwähnten Art gelöst, bei dem der nach der Routenberechnung erwartete Datenverkehr des gesamten Kommunikationsnetzes in Anteile unterteilt wird, dass in einem ersten Schritt entsprechend einer Anfangsverteilung ein Anteil des Datenverkehrs auf die zu jedem Knoten zugehörigen, weiterführenden Links aufgeteilt wird, dass in einem weiteren Schritt unter Berücksichtigung der Ergebnisse des ersten Schrittes eine neue Verteilung des Datenverkehrs ermittelt wird und ein weiterer Anteil auf die zu jedem Knoten zugehörigen, weiterführenden Links entsprechend der neu ermittelten Verteilung aufgeteilt wird, dass in einem nächsten Schritt unter Berücksichtigung der Summe aus den Ergebnissen der vorangegangenen Schritte eine neue Verteilung der Datenverkehrs ermittelt wird und ein weiterer Anteil auf die zu jedem Knoten zugehörigen, weiterführenden Links aufgeteilt wird, und dass dieser Schritt so lange wiederholt wird, bis alle Anteile des gesamten Datenverkehrs auf das Kommunikationsnetz aufgeteilt sind.

Das erfindungsgemäße Verfahren hat den Vorteil, dass es sinngemäß für alle Mehrwege-Routing-Verfahren zur Optimierung der Verkehrsverteilung einsetzbar ist. Außerdem ist das erfindungsgemäße Verfahren um Größenordnungen schneller als aus dem Stand der Technik bekannte Optimierungsverfahren wie beispielsweise "Simulated Annealing". Es werden aber ähnlich gute Ergebnisse bei der Optimierung der Verkehrsverteilung damit erzielt, wodurch die Verteilgewichte bei praktischen Anwendungen in Echtzeit gemeinsam mit dem Routing bestimmt werden können.

Günstig ist dabei, wenn die Verteilung des Datenverkehrs zu jedem Knoten mit heuristischen Methoden ermittelt wird. Heuristische Methoden sind dabei Methoden, die neuer Erkenntnisse auf Basis von Erfahrung gewinnen und meist auf Faustregeln bzw. Algorithmen beruhen. Der Einsatz der heuristische Methoden hat den Vorteil, dass sie mit geringem Aufwand meist gute Lösungen liefern. Sie werden daher dann vorteilhafterweise angewendet, wenn der Aufwand zur Berechnung der optimalen Lösung zu hoch oder zeitintensiv ist.

Vorteilhaft ist es, wenn das erfindungsgemäße Verfahren in einem paketorientierten Kommunikationsnetz angewendet wird, weil bei paketorientierten Netzen für die Übermittlung der Information kein permanenter, durchgehender, physikalischer Kanal zur Verfügung steht. Die Datenpakete werden dann von Netzknoten zu Netzknoten durch das Kommunikationsnetz geleitet, wodurch für Echtzeitübertragung eine möglichst optimale Verteilung des Datenverkehrs, wie sie vom erfindungsgemäßen Verfahren geliefert wird, besonders wichtig ist.

Es ist außerdem günstig, wenn die Anfangswerte für die Verteilgewichte so festgelegt sind, dass jedem Ausgang eines Knoten das gleiche Verteilgewicht zugewiesen wird und die Summe der Verteilgewichte des Knotens den Wert 1 ergibt. Für die zu berechnende Verkehrsverteilung stellen diese Werte einfache Anfangswerte dar, mit denen rasch ein Initialisierungsdurchlauf zur Ermittlung der ersten Näherung an die optimale Verkehrsverteilung bestimmt werden kann.

Für eine Konfiguration, bei der jeder Knoten genau zwei weiterführende Links hat, ist es außerdem von Vorteil, wenn die Berechnung der Verteilgewichte für die Verteilung des Datenverkehrs gemäß der Formel w_{d} = 0,5*((t2-t1)/t_{d} +1) erfolgt, wobei w_{d} das neue Verteilgewicht, t1 den bereits aufgelaufenen Gesamtverkehr auf dem ersten weiterführenden Link, t2 den bereits aufgelaufenen Gesamtverkehr auf dem zweiten weiterführenden Link und t_{d} den auf die zwei weiterführenden Links aufzuteilenden Anteil am Gesamtverkehr bezeichnen. Von dieser Formel wird ein Verteilgewicht w_{d} geliefert, durch das der Datenverkehr t_{d} so auf die beiden Links aufgeteilt wird, dass diese möglichst gleichmäßig belastet werden.

Günstig ist es auch, wenn bei der Ermittlung der Verteilung des Datenverkehrs auf die zu jedem Knoten zugehörigen, weiterführenden Links die Belastung der nachfolgenden Knoten berücksichtigt wird. So wird verhindert, dass eine lokal optimale Verkehrsverteilung für einen Knoten aufgrund des ermittelten Verkehrs auf einem Link zu einer Überlastung eines anderen Knotens führt.

Weiters ist es vorteilhaft, wenn bei der Ermittlung der Verteilung des Datenverkehrs auf die zu jedem Knoten zugehörigen, weiterführenden Links die unterschiedlichen Link-Bandbreiten der weiterführenden Links berücksichtigt werden. Dadurch wird für die Verkehrsverteilung auch die Kapazität eines Links berücksichtigt, der Datenverkehr im Verhältnis der Link-Kapazitäten aufgeteilt und die Überlastung einzelner Links verhindert.

Besonders vorteilhaft ist dabei, bei der Ermittlung der Verteilung des Datenverkehrs auf die zu jedem Knoten zugehörigen Links anstatt der aufsummierten Werte für Verteilungsgewichtung die jeweils aktuell ermittelten Werte für die Verteilungsgewichtung verwendet werden. Auf diese Weise werden einzelnen Berechnungsschritte bei der Bestimmung der Verkehrverteilung eingespart, wodurch rascher eine optimale Verteilung ermittelt wird.

Zusätzlich ist es auch günstig, wenn für die Bestimmung der neuen Werte für die Verteilungsgewichtung ein Ansatz nach einem Gradientenverfahren zum Einsatz kommt. Dadurch wird eine wesentlich gleichmäßigere Konvergenz der Verteilgewichte erzielt, so dass in der Regel weniger Iterationsschritte für die Berechnung der optimalen Verteilgewichte für die Verteilung des Datenverkehrs notwendig sind.

Die Erfindung wird anhand einer Figur näher erläutert. Diese zeigt beispielhaft schematisch die Aufteilung des Datenverkehrs mittels der durch das erfindungsgemäße Verfahren ermittelten Verkehrsgewichtung.

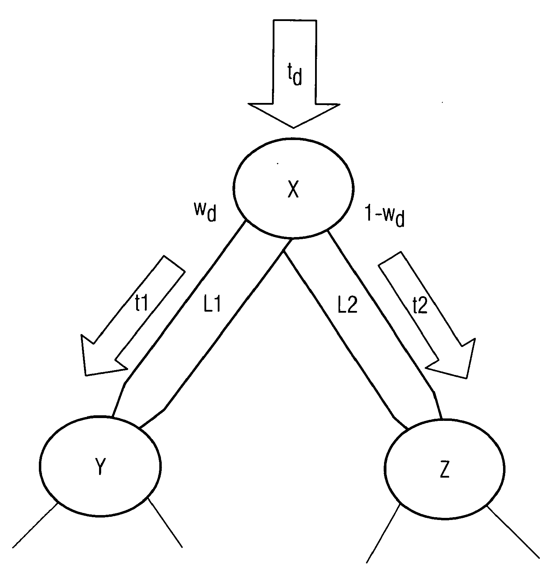

In der Figur sind drei Knoten X, Y, Z eines Kommunikationsnetzes dargestellt. Diese Knoten X, Y, Z sind über Links L1, L2 derart verbunden, dass der Link L1 vom Knoten X zum Knoten Y und der Link L2 vom Knoten X zum Knoten Z weiterführt.

Soll nun für das Kommunikationsnetz eine optimale Verkehrsverteilung ermittelt werden, so laufen im Knoten X die folgenden Schritte ab. Zuerst wird der Datenverkehr t_{d}, der von einer Datenquelle zu einem Ziel geleitet werden soll, in Anteile unterteilt, wobei die Anzahl n der Anteile z.B. vorteilhafterweise zwischen 10 und 100 liegen kann. In einem nächsten Schritt wird für das bereits berechnete Routing einfache Anfangswerte für die Verteilgewichte w_{d} und (1-w_{d}) festgelegt, die beispielsweise den gleichen Wert haben und in Summe den Wert 1 ergeben. Außerdem werden in diesem Schritt die Zielvariablen w1 und w2 für die zu bestimmenden Verteilgewichte mit dem Wert 0 belegt. In einem weiteren Schritt - dem Initialisierungsdurchlauf - wird die anfängliche Verteilung t1, t2 des Verkehrs t_{d} auf den Links L1, L2 berechnet, indem ein Anteil des Verkehrs t_{d} auf die beiden Links L1, L2 entsprechend der Anfangswerte der Verteilgewichte w_{d} und (1-w_{d}) aufgeteilt wird.

Im nächsten Schritt wird mit der Berechnung der optimierten Verteilgewichte an den Knoten X begonnen, wobei der Knoten X mit einem Verkehr t_{d} belastet ist, der von einer Datenquelle zu einem Ziel im Kommunikationsnetz transportiert werden soll. Dieser Verkehr t_{d} wird auf die zu den Knoten Y, Z weiterführenden Links L1 und L2 aufgeteilt, auf denen bereits ein im Initialisierungsdurchlauf bestimmter Verkehr t1 bzw. t2 aufgelaufen ist. Das Verteilgewicht w_{d} wird nun anhand der Formel w_{d} = 0,5*((t2-t1)/t_{d} +1) bestimmt. Ergibt sich nun nach der Berechnung ein Wert für das Verteilgewicht w_{d}, der kleiner als der Wert 0 ist, so wird das Verteilgewicht w_{d} auf einen vordefinierten minimalen Wert wie z.B. 0,02 gesetzt. Ergibt sich nach der Berechnung andererseits ein Wert für das Verteilgewicht w_{d}, der größer ist als 1 reduziert um den vordefinierten minimalen Wert für das Verteilgewicht w_{d}, so wird das Verteilgewicht w_{d} auf den Wert 1 reduziert um den vordefinierten minimalen Wert für das Verteilgewicht w_{d} gesetzt. Diese Begrenzung für das Verteilgewicht w_{d} ist notwendig, um einen Ausgleich der Belastung der Links L1 und L2 auch für sehr kleine Verkehrsanteile t_{d} zu erreichen.

In einem weiteren Schritt werden die Werte für die Zielvariablen w1 und w2 errechnet, wobei sich w1 bzw. w2 aus w1_alt bzw. w2_alt, die im jeweiligen vorhergehenden Verfahrens0durchlauf als w1 bzw. w2 ermittelt bzw. vor dem ersten Durchlauf der Optimierung mit den Werten 0 versehen wurden, und den neue bestimmten Verteilgewichten W_{d} und (1-W_{d}) ergeben. Die Zielvariable w1 wird dabei gemäß der Formel w1 = w1_alt + 1/Anzahl n * w_{d} bestimmt. Die Zielvariable w2 wird gemäß der Formel w2 = w2_alt + 1/Anteile n * (1-w_{d}) berechnet. Beide Werte werden in den Zielvariablen w1 und w2 gespeichert. In einem nächsten Schritt wird der sich auf den Links L1 und L2 ergebenden Verkehrsanteile berechnete und zum bereits vorhandenen Verkehr t1 bzw. t2 addiert. So ergibt sich der neue Verkehr t1 bzw. t2 auf den Links L1, L2 für den nächsten Durchlauf der Optimierung.

Dabei werden die Schritte zur Berechung der Verteilgewichte w_{d} und (1-w_{d}), zur Bestimmung der Zielvariablen w1 und w2 sowie zur Ermittlung der sich auf den Links L1 und L2 ergebenden Verkehrsanteile für den Knoten X so oft wiederholt, bis der gesamte Datenverkehr t_{d} schrittweise in das Kommunikationsnetz gelegt wurde. Es gibt sich eine Anzahl n von Wiederholungen, die der Anzahl n der Anteile entspricht, in die der Datenverkehr t_{d} unterteilt wurde.

Im angeführten Beispiel wird angenommen, dass jeder Netzknoten X, Y, Z nur zwei weiterführende Links L1, L2 besitzt. Falls bei einem Routing in einem Kommunikationsnetz manche oder alle Knoten X, Y, Z mehr als zwei weiterführende Links L1, L2, ... besitzen, so können für diesen Fall die Schritte und die verwendeten Formeln zur Berechungen der Verteilgewichte w_{d} und (1-w_{d}) bzw. der Zielvariablen w1, w2, ... entsprechend erweitert werden.

Für den Sonderfall, dass ein Knoten X nur einen weiterführenden Link L1 besitzt, entfällt allerdings die Berechungen der Verteilgewichte w_{d} und (1-w_{d}).

## Patentansprüche

1. Verfahren zur Optimierung der Verkehrsverteilung in einem, Knoten (X, Y, Z)und Links (L1, L2) umfassenden Kommunikationsnetz mit Mehrwege-Routing, **dadurch gekennzeichnet, dass** der nach der Routenberechnung erwartete Datenverkehr (t_{d}) des gesamten Kommunikationsnetzes in Anteile (n) unterteilt wird, dass in einem ersten Schritt entsprechend einer Anfangsverteilung ein Anteil (n) des Datenverkehrs (t_{d}) auf die zu jedem Knoten (X) zugehörigen, weiterführenden Links (L1, L2) aufgeteilt wird, dass in einem weiteren Schritt unter Berücksichtigung der Ergebnisse (w_{d}, 1- w_{d}) des ersten Schrittes eine neue Verteilung (w1, w2) des Datenverkehrs (t_{d}) ermittelt wird und ein weiterer Anteil (n) auf die zu jedem Knoten (X) zugehörigen, weiterführenden Links (L1, L2) entsprechend der neu ermittelten Verteilung (w1, w2) aufgeteilt wird, dass in einem nächsten Schritt unter Berücksichtigung der Summe aus den Ergebnissen (w1, w2, t1, t2) der vorangegangenen Schritte eine neue Verteilung der Datenverkehrs (t_{d}) ermittelt wird und ein weiterer Anteil (n) auf die zu jedem Knoten (X) zugehörigen, weiterführenden Links (L1, L2) aufgeteilt wird, und dass dieser Schritt so lange wiederholt wird, bis alle Anteile (n) des gesamten Datenverkehrs (t_{d}) auf das Kommunikationsnetz aufgeteilt sind.

2. Verfahren nach Anspruch 1 **dadurch gekennzeichnet, dass** mit heuristischen Methoden zu jedem Knoten (X) eine Verteilung des Datenverkehrs (t_{d}) ermittelt wird.

3. Verfahren nach Anspruch 1 bis 2 **dadurch gekennzeichnet, dass** als Kommunikationsnetz ein paketbasiertes Kommunikationsnetz verwendet wird.

4. Verfahren nach Anspruch 1 bis 3 **dadurch gekennzeichnet, dass** Anfangswerte für die Verteilgewichte (w_{d}, 1- w_{d}) so festgelegt sind, dass jedem Ausgang eines Knoten (X) das gleiche Verteilgewicht (w_{d}, 1- w_{d}) zugewiesen wird und die Summe der Verteilgewichte (w_{d}, 1- w_{d}) des Knotens (X) den Wert 1 ergibt.

5. Verfahren nach Anspruch 1 **dadurch gekennzeichnet, dass** in einem Knoten (X) mit genau zwei weiterführendenden Links (L1, L2) die Bestimmung der Verteilgewichte (w_{d}, 1-w_{d}) für die Verteilung des Datenverkehrs (t_{d}) gemäß der Formel w_{d} = 0,5*((t2-t1)/t_{d} +1) erfolgt, wobei w_{d} das neue Verteilgewicht (w_{d}), t1 den bereits aufgelaufenen Gesamtverkehr (t1) auf dem ersten weiterführenden Link (L1), t2 den bereits aufgelaufenen Gesamtverkehr (t2) auf dem zweiten weiterführenden Link (L2) und t_{d} den auf die zwei weiterführenden Links (L1, L2) aufzuteilenden Anteil am Gesamtverkehr (t_{d}) bezeichnen.

6. Verfahren nach Anspruch 1 bis 5 **dadurch gekennzeichnet, dass** bei der Ermittlung der Verteilung des Datenverkehrs (t_{d}) auf die zu jedem Knoten (X, Y, Z) zugehörigen, weiterführenden Links (L1, L2) die Belastung der nachfolgenden Knoten (X, Y, Z) berücksichtigt wird.

7. Verfahren nach Anspruch 1 bis 6 **dadurch gekennzeichnet, dass** bei der Ermittlung der Verteilung des Datenverkehrs (t_{d}) auf die zu jedem Knoten (X, Y, Z) zugehörigen, weiterführenden Links (L1, L2.) unterschiedliche Link-Bandbreiten der weiterführenden Links (L1, L2) berücksichtigt werden.

8. Verfahren nach Anspruch 1 bis 7 **dadurch gekennzeichnet, dass** bei der Ermittlung der Verteilung des Datenverkehrs (t_{d}) auf die zu jedem Knoten (X, Y, Z) zugehörigen Links (L1, L2) anstatt der aufsummierten Werte für Verteilungsgewichtung (w1, w2) die jeweils aktuell ermittelten Werte für die Verteilungsgewichtung (w_{d}, 1- w_{d}) verwendet werden.

9. Verfahren nach Anspruch 8 **dadurch gekennzeichnet, dass** für die Bestimmung der neuen Werte für die Verteilungsgewichtung (w_{d}, 1- w_{d}) ein Ansatz nach einem Gradientenverfahren zum Einsatz kommt.
